# FASCICULE DE BREVET EUROPEEN

(11) **EP 3 433 980 B1**
(45) Date de publication et mention de la délivrance du brevet: **25.12.2019**
(21) Numéro de dépôt: 17705849.2
(22) Date de dépôt: 15.02.2017
(51) Int. Cl.: H04L 12/40, H04L 12/46

(54) **RESEAU DE COMMUNICATION**
KOMMUNIKATIONSNETZWERK
COMMUNICATION NETWORK

(30) Priorité: 21.03.2016 FR 1652385
(43) Date de publication de la demande: 30.01.2019
(73) Titulaire: Safran Electronics & Defense, 92100 Boulogne-Billancourt (FR)
(72) Inventeur: TOILLON, Patrice, 92100 Boulogne Billancourt (FR); GUILLOT, François, 92100 Boulogne-Billancourt (FR)
(74) Mandataire: Decorchemont, Audrey Véronique Christèle
(86) Numéro de dépôt international: PCT/EP2017/053402
(87) Numéro de publication internationale: WO 2017/162374

(56) Documents cités:
- EP-A1- 1 309 131
- EP-A1- 2 320 603
- WO-A1-2014/124882
- TOILLON PATRICE ET AL: "An optimized answer toward a Switchless Avionics Communication Network", 2015 IEEE/AIAA 34TH DIGITAL AVIONICS SYSTEMS CONFERENCE (DASC), IEEE, 13 septembre 2015 (2015-09-13), XP032802097, DOI: 10.1109/DASC.2015.7311454

## Description

L'invention concerne un réseau de communication notamment un réseau de communication pour aéronef.

### ARRIERE PLAN TECHNOLOGIQUE DE L'INVENTION

Dans le domaine aéronautique, les réseaux de communication servent de support aux communications internes à l'avion, ces communications permettant principalement, bien que non exclusivement, l'échange de données entre les différents éléments de l'avionique.

De tels réseaux de communication comportent, selon une architecture centralisée, un ou des organes de calcul (calculateurs, processeurs...) reliés à l'avionique et mis en communication avec des terminaux d'utilisateurs via des commutateurs pour assurer l'échange de données au sein d'un même organe de calcul, entre plusieurs organes de calcul ou entre un organe de calcul et un terminal d'utilisateur.

La demande Européenne de brevet EP2320603 décrit un système de communication dans un aéronef comprenant un premier sous-réseau de type AFDX et un deuxième sous-réseau connecté au premier par un dispositif passerelle.

Il est aussi possible que les réseaux de communication comportent également un ou plusieurs systèmes de communication à architecture distribuée mis en relation avec les organes de calcul et/ou les terminaux d'utilisateurs. A cet effet, pour chaque système de communication à architecture distribuée, l'un des commutateurs du réseau se raccorde à un équipement passerelle qui comporte un système terminal (plus connu sous l'acronyme ES pour l'anglais End system) dédié à ce raccordement, l'équipement passerelle étant lui-même connecté audit système de communication à architecture distribuée.

Dans de tels cas, le réseau de communication doit donc présenter une configuration relativement lourde pour pouvoir assurer le raccordement du système de communication à architecture distribuée au reste du réseau de communication.

### OBJET DE L'INVENTION

Un but de l'invention est de proposer un réseau de communication qui présente une architecture simplifiée.

### BREVE DESCRIPTION DE L'INVENTION

En vue de la réalisation de ce but, on propose un réseau de communication pour aéronef selon la revendication 1.

De façon avantageuse, de par la structuration particulière du réseau de communication, et en particulier du commutateur, le commutateur sert de système intermédiaire pour le système de communication à architecture distribuée de sorte que le commutateur est directement raccordé audit système de communication à architecture distribuée. On s'affranchit ainsi d'un équipement de type passerelle de raccordement associée à des systèmes terminaux ce qui permet de simplifier l'architecture du réseau de communication.

De façon avantageuse, ainsi configuré, le réseau de communication assure et maintient l'intégrité des différentes trames échangées dans le réseau de communication.

En outre, la ségrégation des ports du commutateur, et donc des canaux logiques associés, permet de limiter le risque qu'une faute puisse se propager d'un système de communication à une autre. De plus, on évite ainsi une perturbation des communications non concernées par le passage de données d'un système de communication à un autre.

Par « système intermédiaire », on entend bien entendu dans la présente demande un « Intermediate System » ou « IS » en anglais et par « système terminal » on entend un « End System » ou « ES » en anglais.

Par « mode différé », on entend bien entendu dans la présente demande un mode « Store and Forward » en anglais.

### BREVE DESCRIPTION DES DESSINS

L'invention sera mieux comprise à la lumière de la description qui suit de modes de réalisation non limitatifs de l'invention en référence aux figures ci-jointes, parmi lesquelles :
- la figure 1 illustre schématiquement un réseau de communication pour aéronef selon un premier mode de réalisation de l'invention,
- la figure 2 illustre schématiquement un commutateur du réseau de communication illustré à la figure 1,
- la figure 3 illustre schématiquement un réseau de communication pour aéronef selon un deuxième mode de réalisation de l'invention,
- la figure 4 illustre schématiquement un réseau de communication pour aéronef selon un troisième mode de réalisation de l'invention,
- la figure 5 illustre schématiquement un réseau de communication pour aéronef selon un quatrième mode de réalisation de l'invention,
- la figure 6 illustre schématiquement un commutateur d'un réseau de communication selon un cinquième mode de réalisation de l'invention.

### DESCRIPTION DETAILLEE DE L'INVENTION

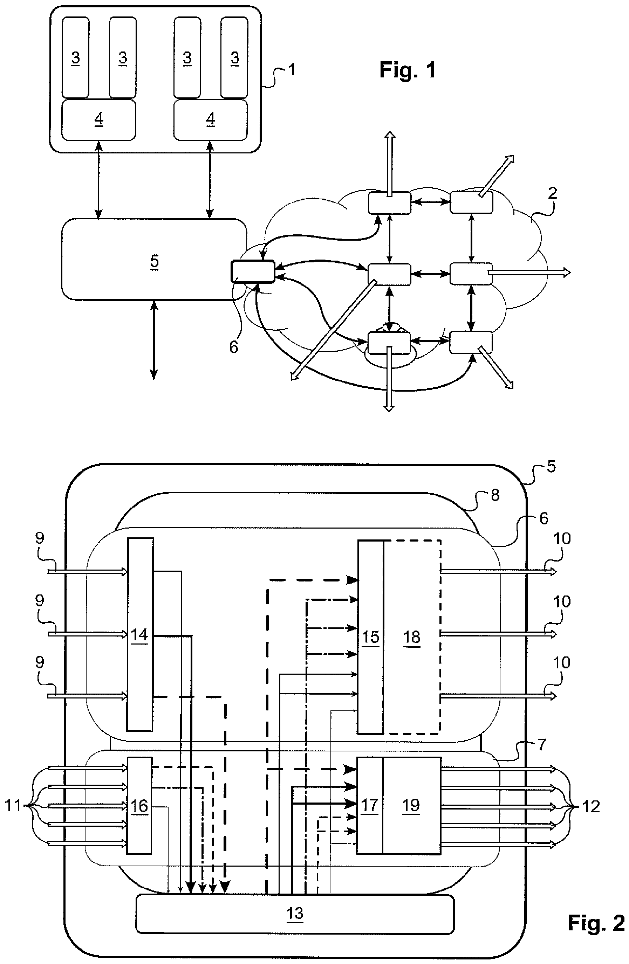

En référence à la figure 1, le réseau de communication selon le premier mode de réalisation de l'invention est un réseau de communication pour aéronef.

Le réseau de communication comporte ici un organe de calcul 1 associé à un élément avionique de l'aéronef (non représenté ici). L'organe de calcul 1 est par exemple un calculateur ou encore un processeur ou un ensemble de calculateurs et/ou de processeurs. L'organe de calcul 1 héberge de multiples applications-fonctions 3 avioniques à exécuter, applications-fonctions 3 propres, pour une configuration donnée, à l'élément avionique associé à l'organe de calcul 1. L'organe de calcul 1 comporte entre autres des unités de raccordement 4 chacune associée à une ou plusieurs applications-fonctions 3 de l'organe de calcul 1. Les unités de raccordement 4 sont ici de type ARINC 664 P7 End System.

Le réseau de communication comporte également un commutateur 5. Le commutateur 5 est raccordé d'une part à l'organe de calcul 1 et d'autre part soit à un autre commutateur (non représenté ici) soit directement à un ou plusieurs terminaux d'utilisateurs (non représentés ici) pour contrôler les échanges de données entre les différentes parties de l'organe de calcul 1 et les échanges de données entre ledit l'organe de calcul 1 et le ou les terminaux d'utilisateurs.

L'organe de calcul 1 et le commutateur 5 ainsi qu'éventuellement les terminaux d'utilisateurs forment ici un système de communication à architecture centralisée.

Le réseau de communication comporte également un système de communication à architecture distribuée 2. Un tel système étant bien connu de l'art antérieur et ne sera donc pas détaillé ici. Le système de communication à architecture distribuée 2 est raccordé au commutateur 5 pour la transmission de données entre le commutateur 5 et des terminaux d'abonnées au système de communication à architecture distribuée 2 (terminaux d'abonnés non représentés ici).

De la sorte, le commutateur 5 est agencé pour servir de système intermédiaire au système communication à architecture distribuée et est agencé pour servir de système intermédiaire au système de communication à architecture centralisée. Le commutateur 5 est ainsi directement raccordé aux différents systèmes de communication du réseau de communication.

Le raccordement peut tout aussi bien être filaire ou non filaire entre l'organe de calcul 1, le commutateur 5, le système de communication à architecture distribuée 2, les terminaux d'utilisateurs et les terminaux d'abonnés.

Le commutateur 5 va être à présent décrit en référence à la figure 2.

Le commutateur 5 comporte un routeur 8 permettant de relayer les trames de données entre un ou plusieurs ports d'entrée du commutateur 5 et un ou plusieurs ports de sortie du commutateur 5. Ce routeur 8 est par exemple de type Switch Engine.

Le routeur 8 comporte un système intermédiaire 6 raccordé au système de communication à architecture distribuée 2 au niveau de trois ports d'entrée 9 du commutateur 5 et au niveau de trois ports de sortie 10 du commutateur 5. Le routeur 8 comporte par ailleurs un système intermédiaire 7 raccordé au système de communication à architecture centralisée au niveau ici du reste des ports d'entrée 11 du commutateur 5 et du reste des ports de sortie 12 du commutateur 5. Les ports d'entrée et de sortie du commutateur 5 sont répartis entre les deux systèmes de communication et ne sont utilisés individuellement que par un seul des deux systèmes de communication.

Pour chaque système de communication, le nombre de ports d'entrée du commutateur 5 associé au système de communication considéré est ici égal au nombre de ports de sortie du commutateur 5 associé audit système de communication considéré.

Par ailleurs, ici tous les ports d'entrée et de sortie sont répartis entre les deux systèmes de communication, aucun port du commutateur 5 ne restant donc inutilisé.

Le commutateur 5 comporte en outre une zone mémoire 13 qui est ici centralisée. Le commutateur 5 est configuré de sorte que toutes les trames de données reçues sur les ports d'entrée du commutateur sont stockées dans la zone mémoire 13 avant d'être retransmises sur les ports de sorties du commutateur 5. Le commutateur 5 fonctionne donc en mode différé.

Ceci permet d'assurer l'intégrité de chaque trame reçue.

De préférence, chaque système intermédiaire 6, 7 du routeur 8 comporte des moyens de gestion des trames de données passant par le routeur 8.

A cet effet, les moyens de gestion comportent, pour le système intermédiaire 6, des moyens de contrôle de l'occurrence des trames entrantes 14 qui sont agencés entre les ports d'entrée 9 et la zone mémoire 13 et des moyens de contrôle de l'occurrence des trames sortantes 15 qui sont agencés entre la zone mémoire 13 et les ports de sortie 10.

Les moyens de contrôle 14, 15 sont configurés pour surveiller l'occurrence des trames respectivement entrantes sur les ports d'entrée 9 dudit système intermédiaire 6 et transmises par la zone mémoire 13 pour l'émission sur les ports de sortie 10 dudit système intermédiaire 6. Les moyens de contrôle des trames entrantes 14 sont configurés pour surveiller toutes les trames entrantes sur tous les ports d'entrée 9 et les moyens de contrôle des trames sortantes 15 sont configurés pour surveiller toutes les trames transmises par la zone mémoire 13 pour tous les ports de sortie 10. De façon préférentielle, tous les ports d'entrée 9 et tous les ports de sortie 10 du système intermédiaire 6 sont ainsi surveillés par les moyens de contrôle de l'occurrence des trames.

De façon particulière, les moyens de contrôle de l'occurrence des trames entrantes 14 sont agencés pour détecter et supprimer toute trame ayant déjà été traitée par lesdits moyens de contrôle c'est-à-dire toute trame ayant été déjà vue par lesdits moyens de contrôle. On évite également ainsi la propagation de trames déjà traitées. De la sorte, on évite la surcharge du réseau de communication en particulier on évite de surcharger la zone mémoire 13 avec des trames déjà traitées.

De même, les moyens de contrôle de l'occurrence des trames sortantes 15 sont agencés pour détecter et supprimer toute trame ayant déjà été traitée par lesdits moyens de contrôle c'est-à-dire toute trame ayant été déjà vue par lesdits moyens de contrôle. On évite ainsi la propagation de trames déjà traitées donc on évite la surcharge du réseau de communication et en particulier de saturer les ports de sortie 10 par des informations anciennes.

De la même façon, les moyens de gestion comportent, pour le système intermédiaire 7, des moyens de contrôle de l'occurrence des trames entrantes 16 et des moyens de contrôle de l'occurrence des trames sortantes 17 fonctionnant de manière identique à ceux du système intermédiaire 6.

Le commutateur 5 est ainsi configuré de sorte que toutes les trames de données reçues correctement (c'est-à-dire les trames correctement formatées et également les trames non supprimées par les moyens de contrôle des trames entrantes 14 et par les moyens de contrôle de l'occurrence des trames entrantes 16) sur les ports d'entrée du commutateur sont stockées dans la zone mémoire 13 avant d'être retransmises sur les ports de sorties du commutateur 5.

Par ailleurs, les moyens de gestion comportent, pour le système intermédiaire 6, des moyens de régulation de l'émission de trames 18 sur les ports de sortie 10 du système intermédiaire 6 qui sont agencés à la suite des moyens de contrôle de l'occurrence des trames sortantes 15.

Ces moyens de régulation sont ici configurés pour travailler selon une loi de régulation de l'émission des trames sur les ports de sortie 10 de type premier entré, premier sorti (plus connu sous l'acronyme anglais FIFO pour First In, First Out).

Les moyens de régulation de l'émission de trames 18 sont de préférence paramétrables, la loi de régulation étant donc également paramétrable. De préférence, les moyens de régulation de l'émission de trames 18 sont paramétrables port par port. La loi de régulation est par exemple paramétrable au niveau du nombre maximum d'octets par trame ou de la taille maximale d'une trame, du temps minimal devant s'écouler entre deux ordres d'émission successifs de trames sur les ports de sortie 10, d'un nombre de trames par ordre d'émission ... Par exemple, la loi peut ainsi autoriser une régulation des trames sur les ports de sortie 10 basée sur une émission d'une seule trame de taille maximale par ordre d'émission ou encore basée sur une émission de plusieurs trames par ordre d'émission dans une limite d'un nombre maximal de trames et/ou d'un nombre maximum d'octets par ordre d'émission.

Lesdits moyens de régulation 18 sont configurés pour ne réguler que les trames provenant du système de communication à architecture centralisée et à destination du système de communication à architecture distribuée 2. Les trames circulant au sein du système de communication à architecture distribuée 2 ne sont ainsi pas soumises auxdits moyens de régulation 18.

De la même façon, les moyens de gestion comportent, pour le système intermédiaire 7, des moyens de régulation de l'émission de trames 19 agencés à la suite des moyens de contrôle de l'occurrence des trames sortantes 17, moyens de régulation fonctionnant de manière identique à ceux du système intermédiaire 6 à la différence près que lesdits moyens de régulation gèrent ici de façon configurable et activable port par port tous les ports de sortie 12 liés audit système intermédiaire 7 (alors que pour le système intermédiaire 6 les moyens de régulation de l'émission de trames 18 ne gèrent que les trames, et les canaux logiques de communication associés, circulant du système de communication à architecture centralisée vers le système de communication à architecture distribué).

Le commutateur 5 est par exemple un commutateur dit A664 (c'est-à-dire reposant sur la norme ARINC 664) dont la structure initiale a été adaptée afin que le commutateur 5 puisse assurer les fonctions de système intermédiaire pour les deux types de systèmes de communication.

De préférence, le commutateur 5 est configuré de sorte que le format des trames concernant les échanges de données au sein du système de communication à architecture centralisée soit reproduit pour le système de communication à architecture distribuée 2. Ainsi, le système de communication à architecture distribuée 2 est également compatible avec la norme A664. On assure donc une continuité stricte des canaux logiques A664 d'un système à un autre.

On note que les ports du commutateur 5 peuvent être raccordés indifféremment au système centralisé de communication comme au système distribué 2 de communication. Un paramétrage initial d'affectation des différents ports du commutateur 5 à l'un ou l'autre des systèmes de communication est suffisant pour assurer un routage correct des différentes trames. Les ports du commutateur 5 peuvent ainsi être tous identiques en terme de structure.

Le commutateur 5 s'avère donc modulable et reconfigurable.

Un mode de fonctionnement du réseau de communication va être à présent décrit en référence aux figures 1 et 2. Dans ce mode de fonctionnement, des données sont transmises de l'organe de calcul 1 au système de communication à architecture distribuée. Bien entendu, cette mise en œuvre n'est pas limitative et d'autres types d'échanges de données peuvent être réalisés avec ce réseau de communication comme indiqué plus bas.

L'organe de calcul 1 génère d'abord, via l'une des application-fonction particulière 3, une consigne contenant des informations données. L'unité de raccordement 4 traduit alors cette consigne de surveillance dans un format adapté pour le commutateur 5 comme par exemple un format SNMP (Simple Network Management Protocol) ou TFTP (Trivial File Transfer Protocol) et la transmet au commutateur 5.

La consigne traduite atteint ainsi le routeur 8 au niveau de l'un des ports d'entrée 11 du système intermédiaire 7 du système de communication à architecture centralisée.

La consigne est d'abord contrôlée par les moyens de contrôle de l'occurrence des trames entrantes 16 avant d'être stockée sur la zone mémoire 13. La consigne est ensuite transmise aux moyens de contrôle de l'occurrence des trames sortantes 17, puis aux moyens de régulation de l'émission de trames 18, avant d'être transmise via l'un ou plusieurs des ports de sortie 10 du système intermédiaire 6 au système de communication à architecture distribuée.

De la même façon, on peut réaliser les échanges de données suivants au sein du réseau de communication directement à partir du même commutateur 5:
- du système de communication à architecture centralisée vers le système de communication à architecture distribuée 2,
- du système de communication à architecture distribuée 2 vers le système de communication à architecture centralisée,
- du système de communication à architecture distribuée 2 vers le système de communication à architecture distribuée 2,
- du système de communication à architecture centralisée vers le système de communication à architecture centralisée,
- du système de communication à architecture distribuée 2 vers le système de communication à architecture distribuée 2 et le système de communication à architecture centralisée,
- du système de communication à architecture centralisée vers le système de communication à architecture distribuée 2 et le système de communication à architecture centralisée.

Le commutateur 5 présente ainsi des canaux logiques permettant un transit local (passage de données uniquement au sein d'un même système de communication), un transit distant (passage de données uniquement entre deux systèmes de communication distincts) et un transit mixte (passage de données à la fois entre deux systèmes de communication distincts et au sein d'un même système).

Tous les échanges inter-systèmes de communication et intra-systèmes de communication sont donc supportés directement par le même commutateur 5 sans modification des trames de données quel que soit le chemin que les trames empruntent (pas de fragmentation des trames, pas de modification de l'en-tête des trames ...).

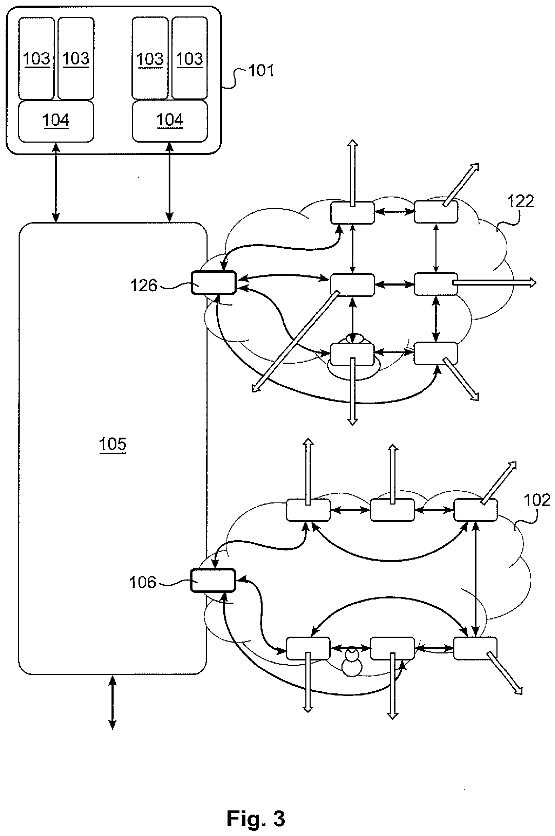

En référence à la figure 3, le réseau de communication selon le deuxième mode de réalisation de l'invention est identique au réseau de communication selon le premier mode de réalisation à la différence près que le réseau de communication comporte cette fois deux systèmes de communication à architecture distribuée 102, 122 en plus du système à architecture centralisée.

Le commutateur 105 comporte ainsi un premier système intermédiaire 106 pour le premier système de communication à architecture distribuée 102 et un deuxième système intermédiaire 126 pour le deuxième système de communication à architecture distribuée 122. Bien entendu, le commutateur 105 comporte aussi un système intermédiaire (non représenté ici) raccordé au système de communication à architecture centralisée.

De la sorte, dans ce mode de réalisation, le commutateur 105 permet les échanges au sein du système de communication à architecture centralisée, au sein du premier système de communication à architecture distribuée 102, au sein du deuxième système de communication à architecture distribuée 122 mais également :
- entre le système de communication à architecture centralisée et, le premier système de communication à architecture distribuée 102 et/ou le deuxième système de communication à architecture distribuée 122,
- entre le premier système de communication à architecture distribuée 102, et le système de communication à architecture centralisée et/ou le deuxième système de communication à architecture distribuée 122,
- entre le deuxième système de communication à architecture distribuée 122 et, le système de communication à architecture centralisée et/ou le premier système de communication à architecture distribuée 102.

De façon particulière, le système intermédiaire 106 et/ou le système intermédiaire 126 peut comprendre des moyens de régulation des trames sortantes sur le système de communication à architecture distribuée correspondant comme dans la premier mode de réalisation. Dans ce cas, soit les deux systèmes de communication à architecture distribuée partagent les mêmes paramétrages de leur loi de régulation et alors les moyens de régulation sont configurés pour ne réguler que les trames provenant du système de communication à architecture centralisée et à destination du système de communication à architecture distribuée correspondant (les trames circulant au sein du système de communication à architecture distribuée correspondant ou entre les deux systèmes de communication à architecture distribuée n'étant alors pas soumises auxdits moyens de régulation) soit les deux systèmes de communication à architecture distribuée ne partagent les mêmes paramétrages de leur loi de régulation et alors les moyens de régulation sont configurés pour réguler les trames provenant du système de communication à architecture centralisée et à destination du système de communication à architecture distribuée correspondant ainsi que les trames provenant de l'autre système de communication à architecture distribuée et à destination du système de communication à architecture distribuée correspondant (seules les trames circulant au sein du système de communication à architecture distribuée correspondant n'étant alors pas soumises auxdits moyens de régulation).

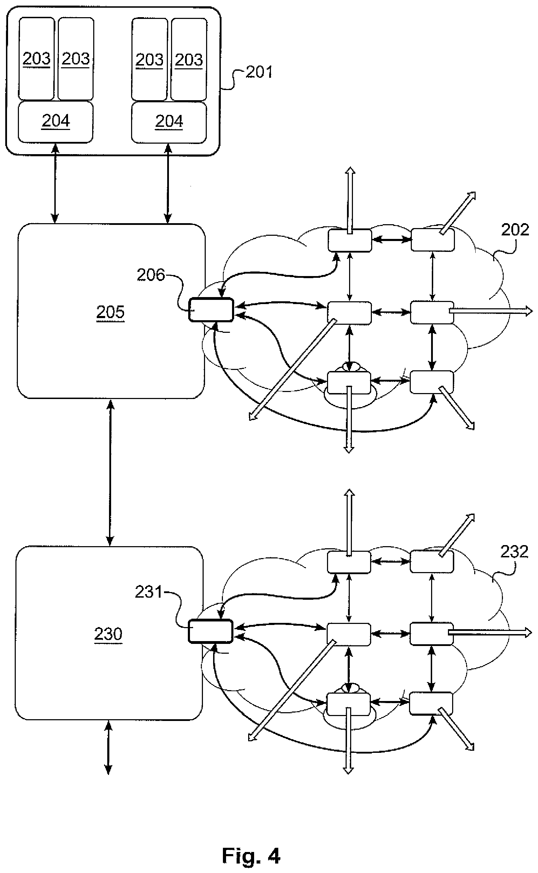

En référence à la figure 4, le réseau de communication selon le troisième mode de réalisation de l'invention est identique au réseau de communication selon le premier mode de réalisation à la différence près que le réseau de communication comporte cette fois deux commutateurs 205 et 230 et deux systèmes de communication à architecture distribuée 202, 232.

Le premier commutateur 205 est, comme dans le premier mode de réalisation, raccordé directement d'une part à l'organe de calcul 201 et d'autre part au premier système de communication à architecture distribuée 202 via le système intermédiaire 206 du premier commutateur 205.

Le deuxième commutateur 230 est raccordé directement au premier commutateur. 205 et d'autre part raccordé directement aux terminaux d'utilisateurs (non représentés ici). Le deuxième commutateur 230 fait ainsi partie du système de communication à architecture centralisée du premier commutateur 205.

Le deuxième commutateur 230 est par ailleurs directement raccordé au deuxième système de communication à architecture distribuée 232 via le système intermédiaire 231 du deuxième commutateur 230.

En outre, chacun des commutateurs 205, 230 comporte un système intermédiaire raccordé au système de communication à architecture centralisé au niveau de ports d'entrée et de ports de sortie du commutateur considéré.

Le réseau de communication comporte ainsi un système de communication à architecture centralisée et deux systèmes de communication à architecture distribuée raccordés de façon indépendante respectivement à l'un des commutateurs du réseau de communication.

Le réseau permet d'assurer des échanges non seulement au sein du système de communication à architecture centralisée, au sein du premier système de communication à architecture distribuée 202, au sein du deuxième système de communication à architecture distribuée 232 mais également :
- entre le système de communication à architecture centralisée de communication et le premier système de communication à architecture distribuée 202 et/ou le deuxième système de communication à architecture distribuée 232,
- entre le premier système de communication à architecture distribuée 202 et le système de communication à architecture centralisée et/ou le deuxième système de communication à architecture distribuée 232,
- entre le deuxième système de communication à architecture distribuée 232 et le système de communication à architecture centralisée et/ou le premier système de communication à architecture distribuée 202.

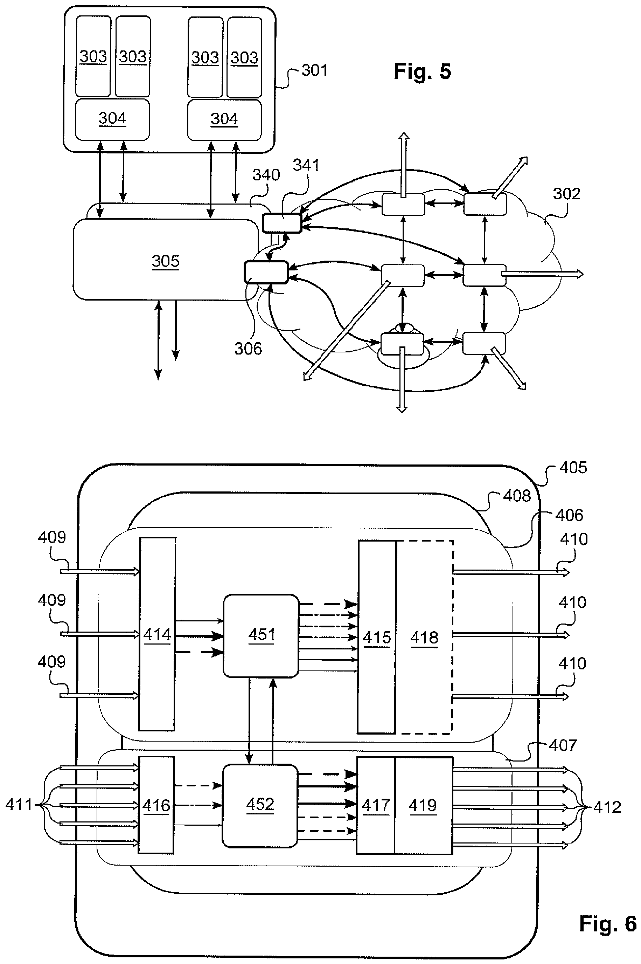

En référence à la figure 5, le réseau de communication selon le quatrième mode de réalisation de l'invention est identique au réseau de communication selon le premier mode de réalisation à la différence près que le réseau de communication à architecture centralisée comporte cette fois deux commutateurs 305 et 340 travaillant en parallèle pour des questions de redondance.

Chaque commutateur 305, 340 est ainsi raccordé de manière indépendante au système de communication à architecture distribuée 2 via un système intermédiaire dédié 306, 341. De la sorte, les trames de données en provenance du système de communication à architecture distribuée 302 et à destination du système de communication à architecture centralisée sont systématiquement transmises aux deux commutateurs 305, 340 et inversement.
En référence à la figure 6, le réseau de communication selon le cinquième mode de réalisation de l'invention est identique au réseau de communication selon le premier mode de réalisation à la différence près que le commutateur 405 est configuré différemment.

En effet ici, la zone mémoire n'est plus centralisée, c'est-à-dire commune aux différents ports d'entrée et de sortie du commutateur 405, mais est distribuée c'est-à-dire que la zone mémoire comporte autant de sous-zones de mémoire que de systèmes intermédiaires du commutateur 405.

Dans le cas présent, la zone mémoire comporte une première sous-zone mémoire 451 associée au premier système intermédiaire 406 dans laquelle sont stockées les trames de données reçues sur les ports d'entrée 9 et une deuxième sous-zone mémoire 452 associée au deuxième système intermédiaire 407 dans laquelle sont stockées les trames de données reçues sur les ports d'entrée 11. Les deux sous-zones mémoires 451, 452 communiquent alors entre elles pour que les trames de données puissent être retransmises sur les ports de sortie visés du commutateur de telle sorte que le commutateur fonctionne en mode différé.

L'invention n'est pas limitée à ce qui vient d'être décrit, mais bien au contraire englobe toute variante entrant dans le cadre défini par les revendications.

En particulier, le réseau de communication pourra comporter un nombre différent d'organes de calcul que ce qui a été proposé.

De même le nombre de commutateurs et/ou le nombre de système de communication à architecture distribuée pourra être différent de ce qui a été décrit. Il y aura autant de système intermédiaire du commutateur que de système de communication à architecture distribuée.

Bien qu'ici le nombre de ports du commutateur associé au système de communication à architecture distribuée soit de trois, ce nombre pourra bien entendu être différent.

## Revendications

1. Réseau de communication pour aéronef comportant au moins :
- un organe de calcul (1 ; 101 ; 201 ; 301),
- un commutateur (5 ; 105 ; 205,230 ; 305, 340 ; 405) raccordé à l'organe de calcul,
- un terminal d'utilisateur raccordé au commutateur de sorte qu'organe de calcul, commutateur et terminal d'utilisateur forment un système de communication à architecture centralisée,
- au moins un système de communication à architecture distribuée (2 ; 102,122 ; 202,232 ; 302) raccordé au commutateur,
le commutateur étant agencé de sorte à servir de système intermédiaire pour le système de communication à architecture centralisée comme pour le système de communication à architecture distribuée, une partie de ses ports d'entrée (9 ; 409) et une partie de ses ports de sortie (10 ; 410) étant ainsi dédiée à un échange de données avec le système de communication à architecture distribuée et une partie de ses ports d'entrée (11 ; 411) et une partie de ses ports de sortie (12 ; 412) étant dédiée à un échange de données avec le système de communication à architecture centralisée, le commutateur comportant une zone mémoire (13 ; 413) dans laquelle sont stockées toutes les trames de données reçues sur ses ports d'entrée avant d'être retransmises sur les ports de sorties du commutateur, le commutateur étant configuré pour fonctionner en mode différé, le réseau étant **caractérisé en ce que** le commutateur assure un échange de données au sein du système de communication à architecture centralisée, au sein du système de communication à architecture distribuée et entre le système de communication à architecture centralisée et le système de communication à architecture distribuée.

2. Réseau de communication pour aéronef selon la revendication 1 comportant en outre un deuxième système de communication à architecture distribuée (122), le commutateur (105) étant agencé de sorte à servir de système intermédiaire pour le premier système de communication à architecture distribuée (102), pour le deuxième système de communication à architecture distribuée et pour le système de communication à architecture centralisée, une partie des ports d'entrée et une partie des ports de sortie du commutateur étant dédiée à un échange de données avec le premier système de communication à architecture distribuée, une partie des ports d'entrée et une partie des ports de sortie du commutateur étant dédiée à un échange de données avec le deuxième système de communication à architecture distribuée et une partie des ports d'entrée et une partie des ports de sortie du commutateur étant dédiée à un échange de données avec le système à architecture centralisée.

3. Réseau de communication pour aéronef selon la revendication 1, comportant un deuxième commutateur (230) et un deuxième système de communication à architecture distribuée (232), le premier commutateur (205) étant agencé de sorte à servir de système intermédiaire pour le premier système de communication à architecture distribuée (202) et le système de communication à architecture centralisée, une partie des ports d'entrée et une partie des ports de sortie du premier commutateur étant dédiée à un échange de données avec le premier système de communication à architecture distribuée et une partie des ports d'entrée et une partie des ports de sortie du premier commutateur étant dédiée à un échange de données avec le système à architecture centralisée, le deuxième commutateur (230) étant agencé de sorte à servir de système intermédiaire pour le deuxième système de communication à architecture distribuée (232) et le système de communication à architecture centralisée, une partie des ports d'entrée et une partie des ports de sortie du deuxième commutateur étant dédiée à un échange de données avec le deuxième système de communication à architecture distribuée et une partie des ports d'entrée et une partie des ports de sortie du deuxième commutateur étant dédiée à un échange de données avec le système à architecture centralisée.

4. Réseau de communication pour aéronef selon l'une des revendications précédentes, dans lequel le commutateur (5 ; 105 ; 205,230 ; 305, 340 ; 405) comporte des moyens de gestion des trames de données passant par le commutateur, les moyens de gestion comportant :
- des moyens de contrôle de l'occurrence des trames entrantes (14 ; 414) qui sont agencés entre les ports d'entrée du commutateur liés au système de communication à architecture distribuée et la zone mémoire (13 ; 413),
- des moyens de contrôle de l'occurrence des trames entrantes (16 ; 416) qui sont agencés entre les ports d'entrée du commutateur liés au système de communication à architecture centralisée et la zone mémoire (13 ; 413),
- des moyens de contrôle de l'occurrence des trames sortantes (15 ; 415) qui sont agencés entre la zone mémoire (13 ; 413) et les ports de sortie liés au système de communication à architecture distribuée,
- des moyens de contrôle de l'occurrence des trames sortantes (17 ; 417) qui sont agencés entre la zone mémoire (13 ; 413) et les ports de sortie liés au système de communication à architecture centralisée.

5. Réseau de communication pour aéronef selon la revendication 4, dans lequel les moyens de gestion comportent :
- des moyens de régulation de l'émission de trames (18 ; 418) sur les ports de sortie du commutateur lié au système de communication à architecture distribuée, lesdits moyens de régulation étant agencés à la suite des moyens de contrôle de l'occurrence des trames sortantes (15 ; 415) liée au système de communication à architecture distribuée,
- des moyens de régulation de l'émission de trames (19 ; 419) sur les ports de sortie du commutateur lié au système de communication à architecture centralisée, lesdits moyens de régulation étant agencés à la suite des moyens de contrôle de l'occurrence des trames sortantes (17 ; 417) liée au système de communication à architecture centralisée.

6. Réseau de communication pour aéronef selon l'une des revendications précédentes, dans lequel la zone mémoire (13) est centralisée au sein du commutateur (5).

## Patentansprüche

1. Kommunikationsnetzwerk für ein Luftfahrzeug, mindestens umfassend:
- ein Rechenorgan (1; 101; 201; 301),
- einen Schalter (5; 105; 205, 230; 305, 340; 405), der an das Rechenorgan angeschlossen ist,
- einen Nutzerterminal, der derart an den Schalter angeschlossen ist, dass das Rechenorgan, der Schalter und der Nutzerterminal ein Kommunikationssystem mit zentralisierter Architektur bilden,
- mindestens ein Kommunikationssystem mit verteilter Architektur (2; 102, 122; 202, 232; 302), das an den Schalter angeschlossen ist,
wobei der Schalter derart ausgebildet ist, dass er als Zwischensystem für das Kommunikationssystem mit zentralisierter Architektur wie auch für das Kommunikationssystem mit verteilter Architektur dient, wobei ein Teil seiner Eingangsanschlüsse (9; 409) und ein Teil seiner Ausgangsanschlüsse (10; 410) somit für einen Datenaustausch mit dem Kommunikationssystem mit verteilter Architektur dediziert sind und ein Teil seiner Eingangsanschlüsse (11; 411) und ein Teil seiner Ausgangsanschlüsse (12; 412) für einen Datenaustausch mit dem Kommunikationssystem mit zentralisierter Architektur dediziert sind, wobei der Schalter eine Speicherzone (13; 413) umfasst, in der alle Datenrahmen gespeichert sind, die an seinen Eingangsanschlüssen empfangen werden, ehe sie an die Ausgangsanschlüsse des Schalters übertragen werden; wobei der Schalter so konfiguriert ist, dass er im Teilstreckenmodus arbeitet,
wobei das Netzwerk **dadurch gekennzeichnet ist, dass** der Schalter einen Datenaustausch im Inneren des Kommunikationssystems mit zentralisierter Architektur, im Inneren des Kommunikationssystems mit verteilter Architektur und zwischen dem Kommunikationssystem mit zentralisierter Architektur und dem Kommunikationssystem mit verteilter Architektur gewährleistet.

2. Luftfahrzeug-Kommunikationsnetzwerk nach Anspruch 1, ferner umfassend ein zweites Kommunikationssystem (122) mit verteilter Architektur, wobei der Schalter (105) derart ausgebildet ist, dass er als Zwischensystem für das erste Kommunikationssystem (102) mit verteilter Architektur, für das zweite Kommunikationssystem mit verteilter Architektur und für das Kommunikationssystem mit zentralisierter Architektur dient, wobei ein Teil der Eingangsanschlüsse und ein Teil der Ausgangsanschlüsse des Schalters für einen Datenaustausch mit dem ersten Kommunikationssystem mit verteilter Architektur dediziert sind, wobei ein Teil der Eingangsanschlüsse und ein Teil der Ausgangsanschlüsse des Schalters für einen Datenaustausch mit dem zweiten Kommunikationssystem mit verteilter Architektur dediziert sind und ein Teil der Eingangsanschlüsse und ein Teil der Ausgangsanschlüsse des Schalters für einen Datenaustausch mit dem System mit zentralisierter Architektur dediziert sind.

3. Luftfahrzeug-Kommunikationsnetzwerk nach Anspruch 1, umfassend einen zweiten Schalter (230) und ein zweites Kommunikationssystem (232) mit verteilter Architektur, wobei der erste Schalter (205) derart ausgebildet ist, dass er als Zwischensystem für das erste Kommunikationssystem (202) mit verteilter Architektur und das Kommunikationssystem mit zentralisierter Architektur dient, wobei ein Teil der Eingangsanschlüsse und ein Teil der Ausgangsanschlüsse des ersten Schalters für einen Datenaustausch mit dem ersten Kommunikationssystem mit verteilter Architektur dediziert sind und ein Teil der Eingangsanschlüsse und ein Teil der Ausgangsanschlüsse des ersten Schalters für einen Datenaustausch mit dem System mit zentralisierter Architektur dediziert sind, wobei der zweite Schalter (230) derart ausgebildet ist, dass er als Zwischensystem für das zweite Kommunikationssystem (232) mit verteilter Architektur und das Kommunikationssystem mit zentralisierter Architektur dient, wobei ein Teil der Eingangsanschlüsse und ein Teil der Ausgangsanschlüsse des zweiten Schalters für einen Datenaustausch mit dem zweiten Kommunikationssystem mit verteilter Architektur dediziert sind und ein Teil der Eingangsanschlüsse und ein Teil der Ausgangsanschlüsse des zweiten Schalters für einen Datenaustausch mit dem System mit zentralisierter Architektur dediziert ist.

4. Luftfahrzeug-Kommunikationsnetzwerk nach einem der vorhergehenden Ansprüche, bei dem der Schalter (5; 105; 205, 230; 305, 340; 405) Mittel zum Verwalten der Datenrahmen umfasst, die durch den Schalter hindurchgehen, wobei die Verwaltungsmittel umfassen:
- Steuermittel zum Steuern des Auftretens der eingehenden Rahmen (14; 414), die zwischen den Eingangsanschlüssen des Schalters, die mit dem Kommunikationssystem mit verteilter Architektur verbunden sind, und der Speicherzone (13; 413) angeordnet sind,
- Steuermittel zum Steuern des Auftretens der eingehenden Rahmen (16; 416), die zwischen den Eingangsanschlüssen des Schalters, die mit dem Kommunikationssystem mit zentralisierter Architektur verbunden sind, und der Speicherzone (13; 413) angeordnet sind,
- Steuermittel zum Steuern des Auftretens der ausgehenden Rahmen (15; 415), die zwischen der Speicherzone (13; 413) und den Ausgangsanschlüssen angeordnet sind, die mit dem Kommunikationssystem mit verteilter Architektur verbunden sind,
- Steuermittel zum Steuern des Auftretens der ausgehenden Rahmen (17; 417), die zwischen der Speicherzone (13; 413) und den Ausgangsanschlüssen angeordnet sind, die mit dem Kommunikationssystem mit zentralisierter Architektur verbunden sind.

5. Luftfahrzeug-Kommunikationsnetzwerk nach Anspruch 4, bei dem die Verwaltungsmittel umfassen:
- Mittel zum Regeln des Sendens von Rahmen (18; 418) an den Ausgangsanschlüssen des Schalters, die mit dem Kommunikationsnetz mit verteilter Architektur verbunden sind, wobei die genannten Mittel zum Regeln nach den Steuermitteln zum Steuern des Auftretens von ausgehenden Rahmen (15; 415) angeordnet sind, die mit dem Kommunikationssystem mit verteilter Architektur verbunden sind,
- Mittel zum Regeln des Sendens von Rahmen (19; 419) an den Ausgangsanschlüssen des Schalters, die mit dem Kommunikationssystem mit zentralisierter Architektur verbunden ist, wobei die genannten Mittel zum Regeln nach den Steuermitteln zum Steuern des Auftretens von ausgehenden Rahmen (17; 417) angeordnet sind, die mit dem Kommunikationssystem mit zentralisierter Architektur verbunden sind.

6. Luftfahrzeug-Kommunikationsnetzwerk nach einem der vorhergehenden Ansprüche, bei dem die Speicherzone (13) im Inneren des Schalters (5) zentralisiert ist.

## Claims

1. A communication network for an aircraft comprising at least:
- a computing unit (1; 101; 201; 301)
- a switch (5; 105; 205, 230; 305, 340; 405) connected to the computing unit,
- a user terminal connected to the switch in such a way that the computing unit, the switch and the user terminal form a communication system with a central architecture,
- at least one communication system with a distributed architecture (2; 102, 122; 202, 232; 302) that is connected to the switch,
with the switch being so designed as to be used as an intermediate system for the communication system with a central architecture as well as for the communication system with a distributed architecture, with a portion of the input ports (9; 409) thereof and a portion of the output ports (10; 410) thereof being dedicated to an exchange of data with the communication system with a distributed architecture and a portion of the input ports (11; 411) thereof and a portion of the output ports (12; 412) thereof being dedicated to an exchange of data with the communication system with a central architecture, with the switch comprising a memory area (13; 413) in which all the data frames received on the input ports thereof prior to being retransmitted on the output ports of the switch are stored, with the switch being so configured as to operate in store and forward mode,
the communication network being **characterized in that** the switch provides an exchange of data within the communication system with a central architecture, within the communication system with a distributed architecture and between the communication system with a central architecture and the communication system with a distributed architecture.

2. A communication network for an aircraft according to claim 1, further comprising a second communication system with a distributed architecture (122), with the switch (105) being so arranged as to be used as an intermediate system for the first communication system with a distributed architecture (102), for the second communication system with a distributed architecture and for the communication system with a central architecture, with a portion of the input ports and a portion of the output ports of the switch being dedicated to a data exchange with the first communication system with a distributed architecture, with a portion of the input ports and a portion of the output ports of the switch being dedicated to an exchange of data with the second communication system with a distributed architecture and a portion of the input ports and a portion of the output ports of the switch being dedicated to an exchange of data with the system with a central architecture.

3. A communication network for an aircraft according to claim 1, comprising a second switch (230) and a second communication system with a distributed architecture (232), with the first switch (205) being so arranged as to be used as an intermediate system for the first communication system with a distributed architecture (202) and the communication system with a central architecture, with a portion of the input ports and a portion of the output ports of the first switch being dedicated to an exchange of data with the first communication system with a distributed architecture and with a portion of the input ports and a portion of the output ports of the first switch being dedicated to an exchange of data with the system with a central architecture, with the second switch (230) being so arranged as to be used as an intermediate system for the second communication system with a distributed architecture (232) and the communication system with a central architecture, with a portion of the input ports and a portion of the output ports of the second switch being dedicated to an exchange of data with the second communication system with a distributed architecture and a portion of the input ports and a portion of the output ports of the second switch being dedicated to an exchange of data with the with a central architecture.

4. A communication network for an aircraft according to one of the preceding claims, wherein the switch (5; 105; 205, 230; 305, 340; 405) comprises means for managing data frames via the switch, with the managing means comprising:
- means for controlling the occurrence of the incoming frames (14; 414) which are arranged between the input ports of the switch associated with the communication system with a distributed architecture and the memory area (13; 413),
- means for controlling the occurrence of the incoming frames (16; 416) which are arranged between the input ports of the switch related to the communication system with a central architecture and the memory area (13; 413),
- means for controlling the occurrence of outgoing frames (15; 415) which are arranged between the memory area (13; 413) and the output ports related to the communication system with a distributed architecture,
- means for controlling the occurrence of outgoing frames (17; 417) which are arranged between the memory area (13; 413) and the output ports related to the communication system with a central architecture.

5. A communication network for an aircraft according to claim 4, wherein the managing means comprise:
- means for regulating the emission (18; 418} of frames on the output ports of the switch related to the communication system with a distributed architecture, with said regulating means being arranged following the means for controlling the occurrence of outgoing frames (15; 415) related to the communication system with a distributed architecture,
- means for regulating the emission of frames (19; 419) on the output ports of the switch related to the communication system with a central architecture, with said regulating means being arranged following the means for controlling the occurrence of outgoing frames (17; 417) related to the communication system with a central architecture.

6. A communication network for an aircraft according to one of the preceding claims, wherein the memory area (13) is central within the switch (5).
